# EUROPEAN PATENT SPECIFICATION

(11) **EP 0 979 360 B1**
(45) Date of publication and mention of the grant of the patent: **16.06.2004**
(21) Application number: 98918812.3
(22) Date of filing: 28.04.1998
(51) Int. Cl.: F16D 41/16, F16D 41/12

(54) **CONTROLLABLE OVERRUNNING COUPLING**
STEUERBARE FREILAUFKUPPLUNG
ACCOUPLEMENT A ROUE LIBRE REGLABLE

(30) Priority: 28.04.1997 US 848105; 28.04.1997 US 100431 P
(43) Date of publication of application: 16.02.2000
(73) Proprietor: MEANS INDUSTRIES, INC., Saginaw, MI 48601 (US)
(72) Inventor: KLECKER, Brian, D., Chesterfield, VA 23838 (US); HARRISON, Sharon, Petersburg, VA 23803 (US)
(74) Representative: W.P. Thompson & Co.
(86) International application number: PCT/US1998/008496
(87) International publication number: WO 1998/049456

(56) References cited:
- US-A- 2 137 643
- US-A- 5 597 057

## Description

### Technical Field

The invention relates to torque-transmitting couplings for accommodating torque transfer from a driving member to a driven member, but which will permit freewheeling overrunning motion of the driving and driven members upon a torque reversal.

### Background Art

Overrunning coupling assemblies are used for transferring torque from a driving member to a driven member in a variety of structural environments. This permits the transfer of torque from a driving member to a driven member while permitting freewheeling motion of the driving member relative to the driven member when torque is interrupted.

U.S. Patent No. 5,597,057 issued January 28, 1997, describes an overrunning coupling assembly including a pair of planar coupling plates situated in close juxtaposed relationship, each coupling plate being rotatable about a common axis. Each planar coupling plate includes a plurality of recesses formed therein. Torque-transmitting struts are received within the recesses of one coupling plate while a spring positioned beneath each strut urges the strut to pivot about a pivot axis, whereby each strut projects from the recess in the one coupling plate into engagement with recesses formed in the other coupling plate.

When torque is transferred from one coupling plate to the other coupling plate in one direction, at least one strut becomes locked in the respective recesses of the coupling plates. If the driven coupling plate overruns the driving coupling plate when torque transfer is interrupted, the struts will ratchet over the recesses of the driven plate, each strut pivoting about its respective pivot axis while still being urged by its respective spring into ratcheting engagement with the driven coupling plate. This ratcheting engagement of the struts and the driven coupling in the overrunning condition generates unwanted noise while further causing undesirable wearing of both the struts and the driven coupling plate.

### Disclosure Of The Invention

It is an object of the invention to provide an improved planar overrunning coupling assembly wherein the overrunning condition is characterized by an absence of ratcheting engagement of any strut with a coupling plate.

A further object of the invention is to provide an improved planar overrunning coupling assembly for selectively transferring torque in a first direction only, in a second direction only, or in neither direction.

The improved planar coupling assembly of this invention includes a pair of planar coupling plates situated in close juxtaposed relationship, each coupling plate being rotatable about a common axis (A), and a plurality of struts received within angularly-spaced recesses formed in one coupling plate, each strut projecting from the recess in the one coupling plate into engagement with recesses formed in the other coupling plate, characterized by a strut retainer plate disposed between the coupling plates and generally rotatable with one of the coupling plates, the retainer plate including a plurality of angularly-spaced apertures, the retainer plate being angularly movable relative to the one coupling plate and the struts from a first angular position, wherein a first one of the struts extends through one of the retainer plate apertures into engagement with the other coupling plate, to a second angular position, wherein the first one of the struts does not extend through the one retainer plate aperture into engagement with the other coupling plate.

With the struts thus prevented from engaging the driven coupling plate, ratcheting in the overrunning condition is eliminated, and any noise that would be associated with ratcheting of the struts over the recesses of the driven plate is likewise eliminated. Moreover, the possibility of wear of the struts and coupling plates is substantially reduced. As such, our improved coupling assembly is particularly adapted for high-speed operating conditions and for operation under low-volume lubricating oil operating conditions. Still further, manufacture of our improved coupling assembly does not require the precision machining operations that are required in the manufacture of conventional sprag couplings and roller couplings, wherein the presence of burrs or other manufacturing defects would otherwise greatly increase component wear. Indeed, in accordance with another feature of the invention, many of the components may be manufactured using powder metal casting and forming techniques.

According to another feature of the invention, a coupling assembly has three operating states, each of which is characterized by a separate angular position of the strut retainer plate relative to the one coupling plate with which it generally rotates. When the strut retainer plate is in a first angular position relative to the one coupling plate, struts disposed in each of a first series of recesses in the one coupling plate are allowed to pivot and extend through the apertures in the strut retainer plate into engagement with a first series of complementary recesses in the other coupling plate. In the meantime, struts disposed in a second series of recesses in the one coupling plate -- each of which pivot in an angular direction opposite to the angular direction of the pivotal motion of the struts in the first series of recesses -- are prevented by the retainer plate from engaging with a second series of complementary recesses in the other coupling plate. This permits torque transfer from the driving member to the driven member only in a first rotational direction.

When the strut retainer plate is in a second angular position relative to the one coupling plate, the struts disposed in the second series of recesses are allowed to pivot and extend through the retainer plate apertures into engagement with the second series of complementary recesses in the other coupling plate. In the meantime, struts disposed in the first series of recesses are prevented by the retainer plate from engaging with a first series of complementary recesses in the other coupling plate. This permits torque transfer from the driving member to the driven member only in a second driving direction opposite the first driving direction.

When the strut retainer plate assumes a third angular position relative to the one coupling plate with which it generally rotates, the struts in each series of recesses in the one coupling member are held within their respective recesses, thereby permitting free-wheeling motion of the coupling plates in both directions.

### Brief Description Of The Drawings

FIGURE 1 is a perspective view of an overrunning coupling assembly wherein torque is transferred from a driving shaft to a driven coupling plate and which will permit free-wheeling motion in a clockwise direction;
FIGURE 2 is a view similar to Figure 1 indicating the operating mode in which free-wheeling motion is permitted in each direction;
FIGURE 3 is a view similar to Figures 1 and 2 indicating that torque may be transferred from a driving shaft to a driven coupling plate while permitting free-wheeling motion in a counterclockwise direction;
FIGURE 4 is a partial exploded assembly view of the planar coupling illustrated in Figures 1, 2 and 3;
FIGURE 5a is a plan view of a driven clutch plate for the coupling assembly of Figures 1, 2 and 3;
FIGURE 5b is an end elevation view of the coupling plate of Figure 5a;
FIGURE 6a is a plan view of a strut retainer plate, which is located between the planar coupling driving plate and the planar coupling driven plate as indicated in Figure 4;
FIGURE 6b is an end elevation view of the retainer plate of Figure 6a;
FIGURE 7 is a detailed perspective view of the strut springs that are located in recesses formed in the planar coupling driving plate;
FIGURE 8a is a plan view of the planar coupling driving plate which shows the recesses for retaining the springs of Figure 7;
FIGURE 8b is an end elevation view of the coupling plate of Figure 8a;
FIGURE 9a is a plan view of a strut that is adapted to be located in the recesses of the plate shown in Figure 8a;
FIGURE 9b is an end elevation view of the strut of Figure 9a;
FIGURE 10 is a plan view of a snap-ring that is used in the planar coupling assembly to retain the driving coupling plate in assembled relationship with respect to the driven coupling plate;
FIGURE 11a is a view of the driving shaft with external splines that engage internal splines on the driving coupling plate;
FIGURE 11b is a side elevation view of the driving shaft of Figure 11a;
FIGURE 12a is a partial assembly view showing the strut retainer plate, the struts, and the driving coupling plate in assembled relationship wherein the strut retainer plate is positioned angularly to permit torque delivery in one direction;
FIGURE 12b is a view similar to Figure 12a wherein the strut retainer plate is positioned to permit transfer of torque in the opposite direction;
FIGURE 12c is a view similar to Figures 12a and 12b wherein the retainer plate is positioned to permit free-wheeling motion in each direction;
FIGURE 13a is cross-sectional view of the planar coupling assembly wherein the strut retainer plate is positioned for torque transfer in a first direction;
FIGURE 13b is a view similar to Figure 13a showing the strut retainer plate shifted angularly to a position that permits torque delivery in a second direction;
FIGURE 13c is a view similar to Figures 13a and 13b wherein the strut retainer plate is moved to a position that will accommodate free-wheeling relative motion of the coupling plates in either rotary direction;
FIGURE 14 is a plan view partly in section of the coupling assembly of the invention wherein a central actuator shaft is situated within the coupling plates;
FIGURE 15a is a view of a modified planar coupling assembly that is adapted for torque transfer in one direction, but which permits free-wheeling relative motion of the coupling plates in the opposite direction, the strut retainer plate being positioned to permit free-wheeling motion; and
FIGURE 15b is a view similar to Figure 15a wherein the strut retainer plate is positioned for permitting torque transfer from one coupling plate to the other.

### Best Modes For Carrying Out The Invention

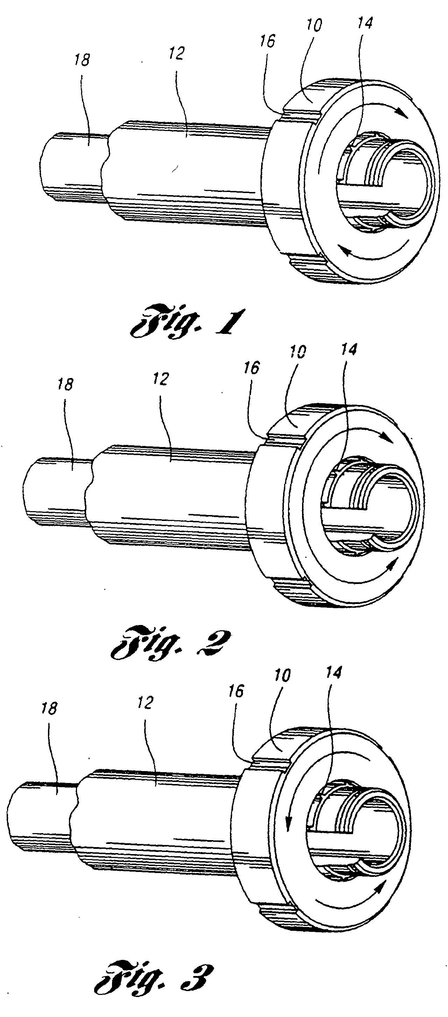

Figure 1 shows at 10 a driven plate of a planar coupling assembly. Not shown in Figure 1 is a driving coupling plate that is nested within the driven coupling plate. The driving coupling plate is drivably connected to a torque input shaft 12. This driving connection is established by internal splines formed on the driving coupling plate, which drivably engage external splines 14 on the shaft 12.

The driven coupling plate 10 may be provided with drive keyways 16 which, in turn, establish a driving connection with a driven coupling member, for example, in a power transmission mechanism.

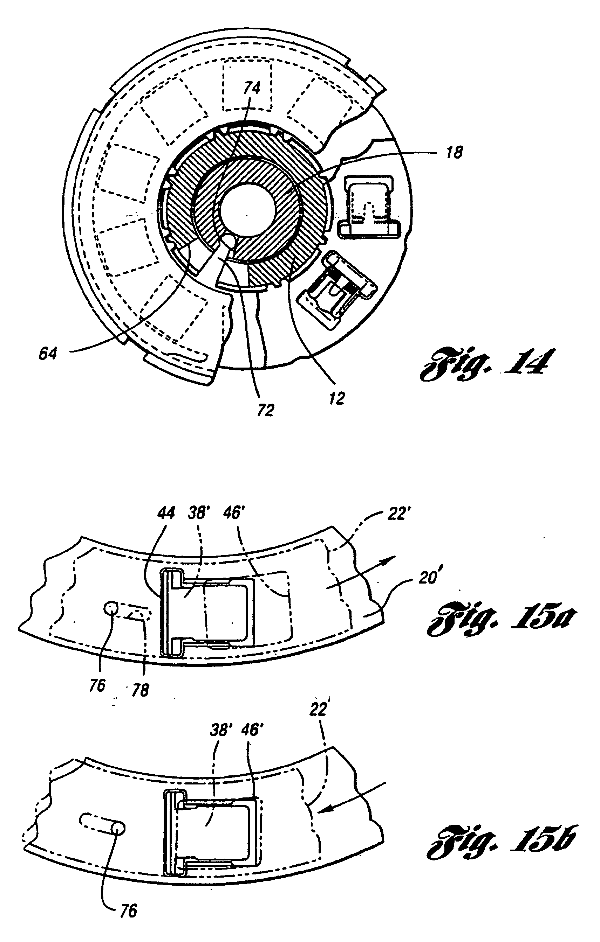

A strut retainer actuator shaft 18 is situated within the torque input shaft 12. This actuator shaft is best seen in Figure 14. It may be oscillated about its axis so that its angular disposition relative to the shaft 12 can be changed. Actuator shaft 18 is drivably connected to a strut retainer plate, which will be described subsequently, thereby causing the strut retainer plate to be adjusted angularly with respect to the axis of the shaft 12.

Figure 2 corresponds to Figure 14. Figure 2 indicates, however, that the driven coupling plate 10 can free-wheel in both angular directions. This is illustrated by the bi-directional arrow shown in Figure 2. The bi-directional free-wheeling motion is achieved in the operating mode illustrated in Figure 2 as the actuator shaft 18 is adjusted on its axis relative to the shaft 12 to a position intermediate the position that effects torque transfer in a first direction and a position that effects torque transfer in the opposite direction.

Figure 3 is a view similar to Figures 1 and 2, but it illustrates a single directional arrow. This arrow designates the free-wheeling motion in a direction opposite to the direction of free-wheeling motion of Figure 1, although torque transfer in the opposite direction is effected. The operating mode shown in Figure 3 is achieved by adjusting the actuator shaft 18 to a third operating position relative to the shaft 12, thereby adjusting the strut retainer plate to a torque transfer position opposite to the torque transfer position for the operating mode illustrated in Figure 1.

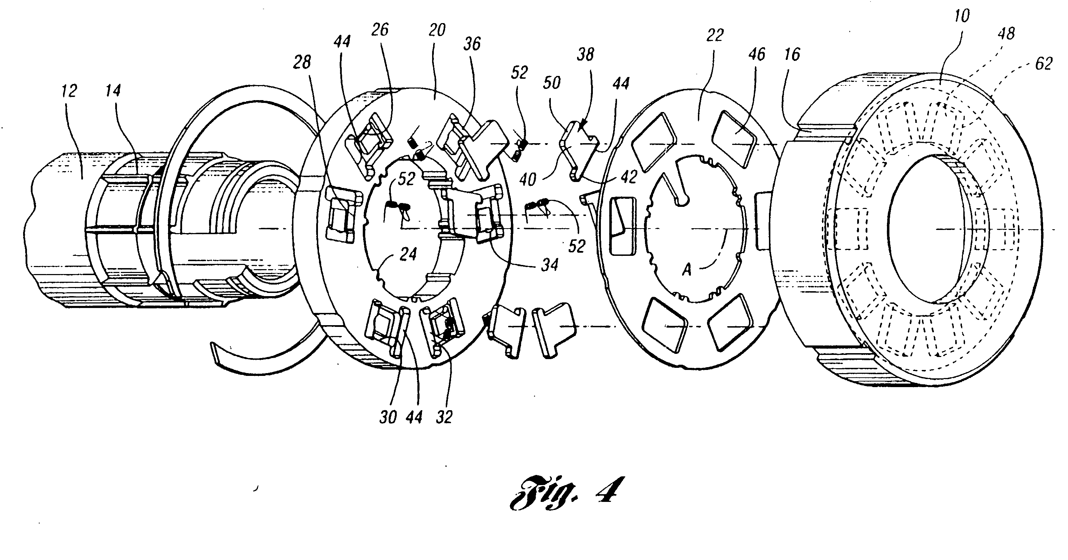

In Figure 4, we have illustrated the clutch assembly in an exploded view. The driving coupling plate, as shown at 20, is adapted to be received in the driven clutch plate 10. Located intermediate the juxtaposed faces of the coupling plate 20 and the coupling plate 10 is a strut retainer plate 22.

The driving coupling plate is provided with splines 24, which engage drivably the external splines 14 on the shaft 12. The driving coupling plate 20 has a first pair of adjacent recesses 26,28 situated at a first angular position; a second pair of adjacent recesses 30,32 situated at a second angular position displaced 120° from the first angular position; and a third pair of recesses 34,36 at a third angular position displaced 120° from the second angular position.

There are six struts 38 received in the six recesses 26,28,30,32,34,36 in driving coupling plate 20. Each strut 38 has a planar substantially rectangular portion 40 and a pair of ears 42, the latter being located at one margin of the strut. The edge of the strut on which the ears 42 are formed defines a pivotal edge that registers with one edge 44 of its companion recess.

As seen in Figure 4, the pivotal edge of the strut in recess 26 is located proximate to the pivotal edge 44 for the adjacent strut in recess 28 at the first angular position. Similarly, the pivotal edges for the struts located at the second angular position are located in close proximity, one with respect to the other. This is true also of the struts for recesses 34 and 36 at the third angular position.

The strut retainer plate 22 is provided with six apertures 46. These are arranged angularly about the axis of the clutch, which is shown at A. The six apertures 46 are arranged in pairs, each pair being disposed 120° out of position with respect to the other pairs of recesses.

When the retainer plate 22 is appropriately positioned to a first angular position for torque transfer in one direction, one aperture 46 will be disposed directly over the recess 26, another will be disposed directly over the recess 30, and another will be disposed directly over recess 34. Thus, one recess will be disposed over one recess of each pair of recesses in the plate 20. Alternatively, when the retainer plate 22 is adjusted angularly in the opposite direction to a second angular position, an aperture 46 in the retainer plate 22 will be in direct registry with each of recesses 28, 32 and 36.

The driven coupling plate 10 is provided with angularly spaced recesses 48 in its internal planar face. These recesses 48 are evenly-spaced about the axis A and are arranged at a radial location corresponding to the radial location of the recesses 26-36 in the driving coupling plate 20.

The apertures 46 and the recesses 48 are sized so that the edges 50 of the struts 38 can enter the recesses 48 in the driven coupling plate 10 and engage one edge of the recesses 48 to establish a locking action between the struts and the driven coupling plate 10 that will permit torque transfer between the driving coupling plate 20 and the driven coupling plate 10.

If retainer plate 22 is adjusted about axis A to its first angular position such that an aperture 46 fully registers with recess 26, recess 28 will be out of registry with the adjacent aperture 46 and will be at least partially covered by the retainer plate 22. Thus, the strut located at recess 28 will be held in place in the recess 28 to prevent pivotal motion about the pivotal edge 44. This prevents entry of the strut into the recesses 48 of the clutch plate 10. Similarly, with the retainer plate 22 in its first angular position, an aperture 46 will be fully registered with recess 30 while recess 32 will be at least partially covered by the plate 22, and an aperture 46 will be fully registered with recess 34 while recess 36 will be at least partially covered by.the retainer plate 22. This permits torque transfer from the driving coupling plate 20 to the driven coupling plate 10 in a first direction.

If the plate 22 is adjusted about the axis A to its second angular position so that the apertures 46 register with recesses 28, 32 and 36, the struts in those recesses may pass through apertures 46 and engage the opposite edge of the recesses 48 in the driven coupling plate 10. At the same time, recesses 26, 30 and 34 will be at least partially covered by the retainer plate 22 to prevent the struts located in those recesses from pivoting into engagement with recesses 48 in the driven coupling plate 10. This permits torque transfer from the driving coupling plate 20 to the driven coupling plate 10 in a second direction opposite the first direction.

If the retainer plate 22 is adjusted to a third angular position intermediate the two torque transfer positions, both struts 38 in the first pair of recesses 26,28 will be at least partially covered by retainer plate 22 and, thus, prevented from moving pivotally about their respective pivotal edges into engagement with the driven coupling plate 10. Similarly, the struts 38 respectively located in second and third pairs of recesses 30, 32, 34, 36 will be prevented from pivotal movement into engagement with the driven coupling plate 10. When the retainer plate 22 is thus positioned in its third angular position, the driving coupling plate 20 and the driven coupling plate 10 can free-wheel, one with respect to the other, in either direction.

As seen in Figure 5a, the driven coupling plate 10 has its recesses 48 equally spaced about the axis A of coupling. They are strategically positioned so that three of them will permit engagement of one of each of the three pairs of struts carried by the driving plate 20. During torque transfer in the opposite direction, the strategic position of the recesses 48 will permit engagement of the other strut of each of the three pairs of struts in the coupling plate 20.

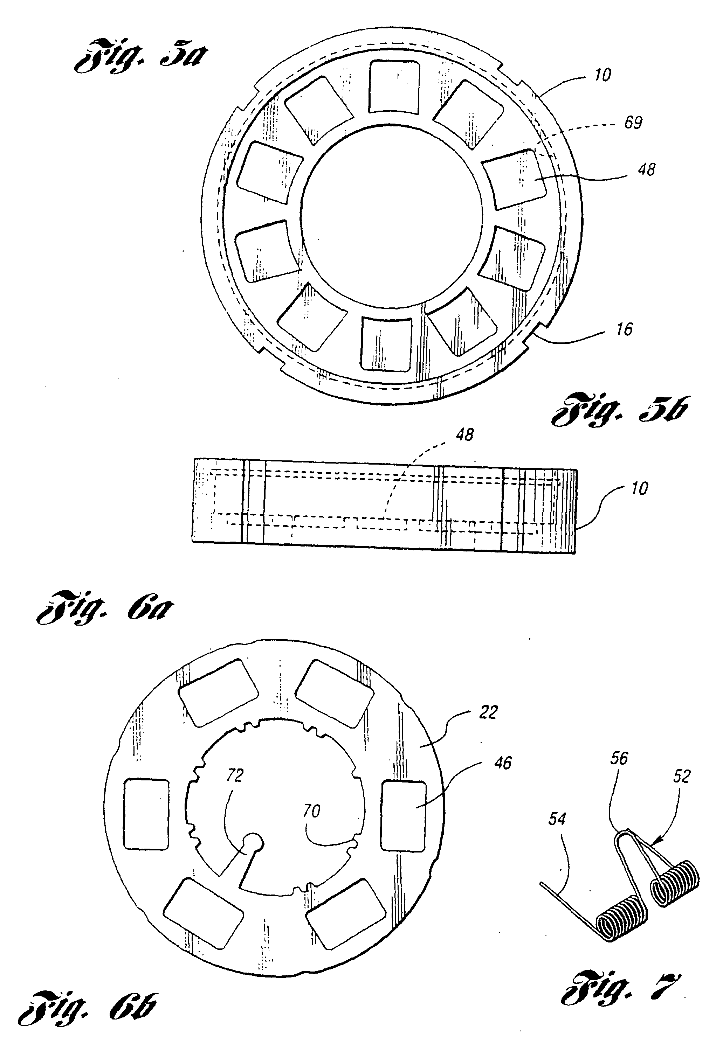

Although any suitable strut spring can be used with the invention, Figure 7 shows in perspective a strut spring 52 used in this embodiment of the invention. One spring 52 is located under each strut. The springs 52 are located in the recesses formed in the plate 20. Spring reaction arms 54 on the spring 52 engage the base of the driving plate recesses. An intermediate actuator portion 56 engages the planar portion 40 of each strut.

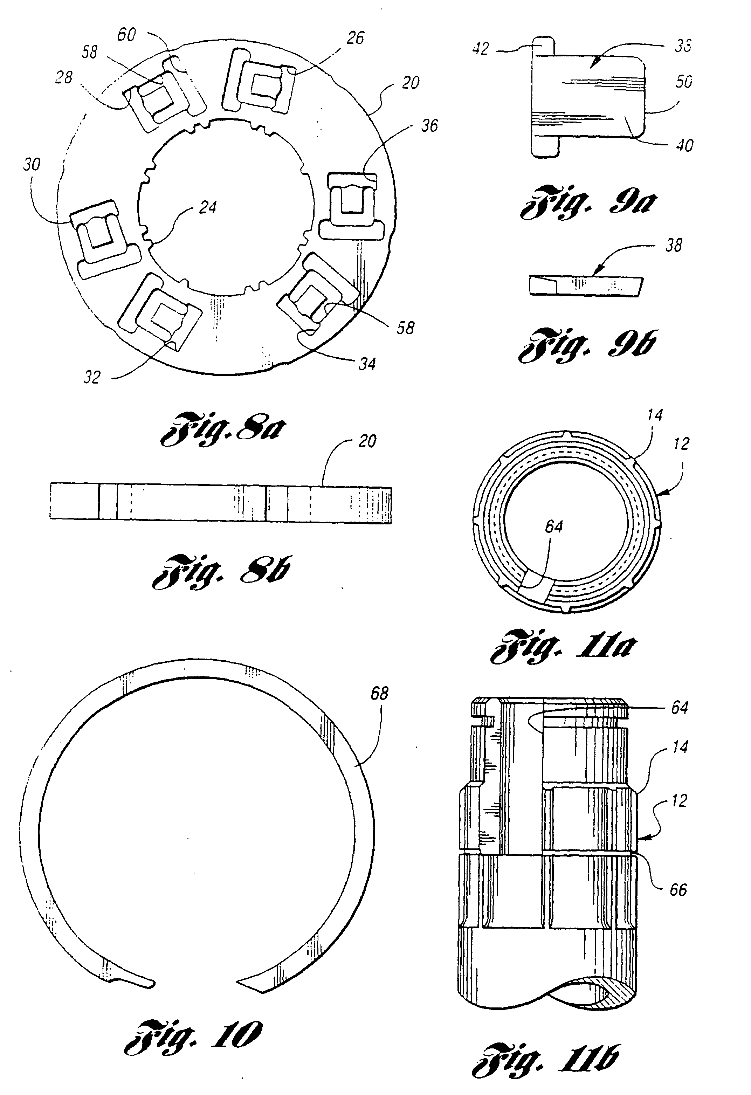

Figure 8a shows a plan view of the driving coupling plate 20. Seen in Figure 8a are recesses 26 through 36. Each recess has a pocket of generally horseshoe shape with sides that receive the arms 54 of the springs 52. The horseshoe shape pocket is illustrated in Figure 8a at 58. Figure 8a also shows an elongated portion 60 of the recesses that receive the struts. The recesses 60 are sized so that the ear portion 42 at the pivotal edge of each strut can be secured in place.

The edge of each recess 48 in driven coupling plate 10 that is engaged by an edge 50 of a strut 38 when the retainer plate 22 is in its first or second angular position is illustrated in Figure 4 by reference numeral 62.

As seen in Figures 11a and 11b, the end of the shaft 12 is provided with an axially extending slot 64, which extends to a circumferential groove 66 formed in the portion of the shaft that is splined, as shown at 14. The inside diameter of the groove 66 generally is equal to the minor diameter of the splines 14. When the driving coupling plate 20 is received within the driven coupling plate 10, the plates are held axially fast on the shaft 12 by retainer ring or snap-ring 68. The snap-ring 68 is received in internal groove 69 formed in the driven coupling plate 10, as best seen in Figure 5a.

When the coupling is assembled, the retainer plate 22 is located within the groove 66. As seen in Figure 6a, retainer plate 22 is provided with internal splines 70, the minor diameter of the splines 70 being piloted on the base of the groove 66. The retainer plate 22 thus can move angularly about the axis A of the clutch. The retainer plate 22, as seen in Figure 6a, is provided with an actuator tab 72, which is received in slot 64 in the shaft 12 when the coupling is assembled. This is best seen in Figure 14. The actuator shaft 18 also is provided with a slot 74, as seen in Figure 14. The inner extremity of the actuator tab 72 is received in this slot 74 in shaft 18.

The width of the slot 74 is substantially less than the width of the slot 64. Thus, when the actuator shaf t 18 is indexed rotatably relative to the shaft 12, the retainer plate will be adjusted angularly about the axis of the coupling relative to the recesses in the driving coupling plate 20. When the actuator shaft 18 is moved in one direction, the retainer plate will be adjusted to a position that will retain one strut of each of the pairs of struts 26 or 28, 30 or 32, and 34 or 36, while permitting the other strut of each pair to pass through the apertures 46 into engagement with the recesses of the driven clutch plate 20. When the shaft 18 is rotatably indexed in the opposite direction, the other struts of each of the pairs of struts will be held in their respective recesses in the driving plate 20, while permitting the companion strut of each pair to enter the recesses of the driven coupling plate.

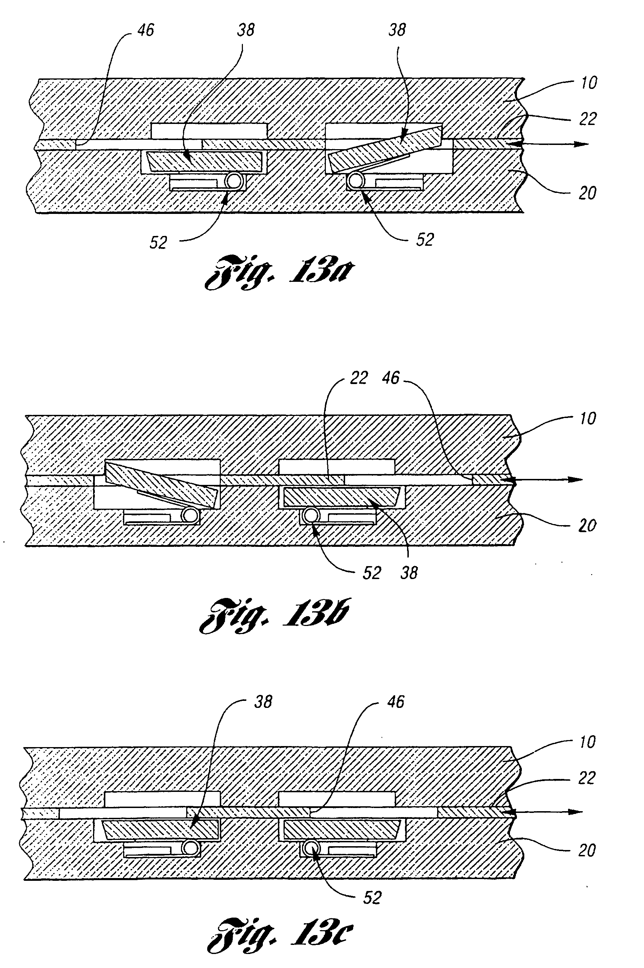

Figures 12a, 12b and 12c show the three operating positions of the retainer plate 22. When the retainer plate 22 is positioned in its first angular position as shown in Figure 12a, the strut at location A is in full registry with the aperture 46, whereas the strut at location B is out of registry with its aperture 46. Similarly, the struts at the companion locations C and D and the struts at the companion locations E and F have one strut out of registry and the other strut in full registry with the apertures 46.

When the plate 22 is adjusted to its second angular position as shown in Figure 12b, the one strut at locations A, C and E becomes misaligned with its respective aperture 46, while the other struts at companion locations B, D and F fully register with their respective retainer plate apertures 46. This permits torque transfer in a direction opposite to the direction of torque transfer associated with Figure 12a.

Figure 12c shows the third angular position of the retainer plate that will permit free-wheeling motion in both directions. In this instance, the plate 22 is adjusted angularly relative to the shaft 12 so that both struts of each pair of struts are out of registry with respect to their apertures 46.

Figure 13a is a cross-sectional view that further illustrates the relationship of the struts with respect to the coupling plates 10 and 20 when the coupling is conditioned for torque transfer in the operating mode shown in Figure 12a. The location of the springs 52 also is best seen in Figures 13a, 13b and 13c.

Figure 13b shows the position of the retainer plate 22 relative to the coupling plates 10 and 20 when torque is delivered in a direction opposite to the direction for the operating mode of Figure 13a. Figure 13c shows a position of the retainer plate 22 relative to the coupling plates 10 and 20 when the assembly is conditioned for the operating mode in which free-wheeling motion can occur in each direction.

We have shown in Figures 15a and 15b an embodiment of the invention wherein torque can be transferred in one direction but not in the opposite direction. Free-wheeling motion in the opposite direction, however, is accommodated. In Figure 15a, the retainer plate 22' is adjusted to a position relative to the plate 20' so that the apertures 46' are out of registry with respect to the recesses in the coupling plates. The retainer plate 22' then will prevent pivotal motion of the struts 38' about their respective pivotal edges 44. The coupling in the operating mode shown in Figure 15a will permit free-wheeling motion. When the assembly assumes the position shown in Figure 15b, the retainer plate 22' is indexed so that the apertures 46' fully register with the recesses in the coupling plates. This permits the struts 38' to engage the recesses in the driven coupling plate.

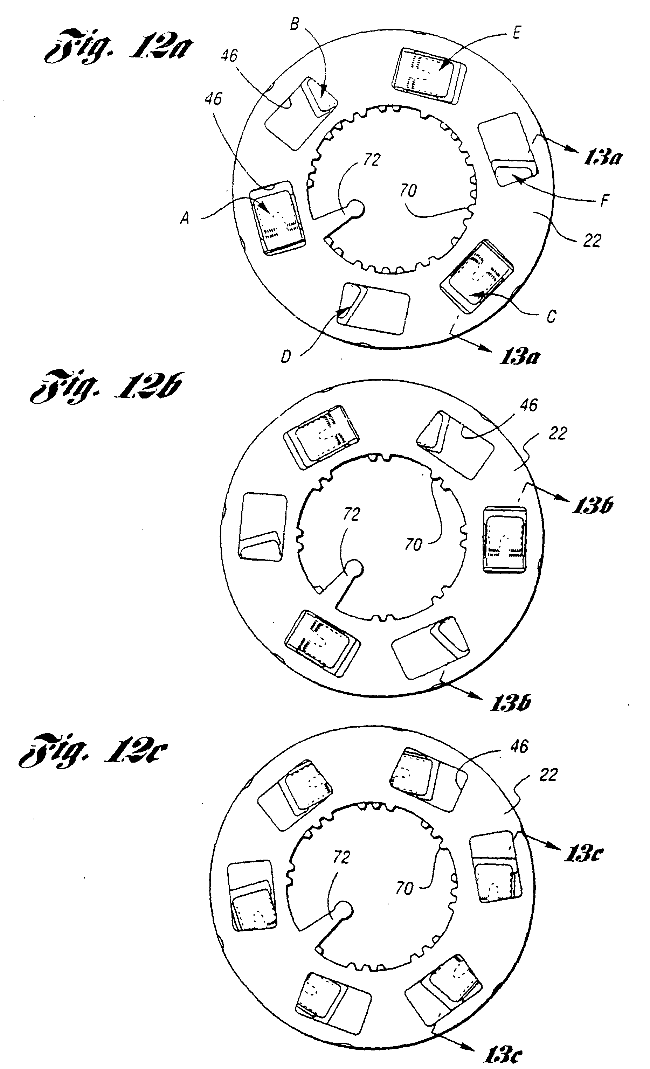

The elements of the embodiment of Figures 15a and 15b that have a counterpart in the embodiment of Figures 1-14 carry prime notations on corresponding reference numerals.

The plate 20' in the embodiment shown in Figures 15a and 15b carries a locator pin 76 which is received in a slot 78 in the retainer plate 22. This pin and slot arrangement limits the angular displacement of the retainer plate 22 so that it will assume either one position or the other. In Figure 15b, the pin registers with one end of the slot to permit full registry of the apertures 46 with respect to the recesses in the coupling plates.

When torque transfer through the coupling structure terminates and the coupling assembly assumes the overrunning mode shown in Figure 15a, the retainer plate 22 will be dragged by the fluid dynamic drag forces in the lubricating oil so that it is indexed to the position shown in Figure 15a during the overrunning operating mode. Upon a torque reversal, the drag forces on the retainer plate 22' are reversed, thereby allowing the apertures 46' to register with the recesses and the coupling plates and establish a one-way torque transfer path.

## Claims

1. A planar overrunning coupling assembly including a pair of planar coupling plates(10, 20) situated in close juxtaposed relationship, each coupling plate being rotatable about a common axis (A), and a plurality of struts (38) received within angularly-spaced recesses (26, 28, 30, 32, 34, 36) formed in one coupling plate (20), each strut (38) projecting from the recess in the one coupling plate into engagement with recesses (48) formed in the other coupling plate (10), **characterized by** a strut retainer plate (22) disposed between the coupling plates (10, 20) and generally rotatable with one of the coupling plates (20), the retainer plate (22) including a plurality of angularly-spaced apertures (46), the retainer plate (22) being angularly movable relative to the one coupling plate (20) and the struts (38) from a first angular position, wherein a first one of the struts (38) extends through one of the retainer plate apertures (46) into engagement with the other coupling plate (10), to a second angular position, wherein the first one of the struts (38) does not extend through the one retainer plate aperture (46) into engagement with the other coupling plate (10).

2. A planar coupling assembly in accordance with claim 1, wherein the retainer plate (22) retains the struts (38) within the recesses (26, 30, 34) in the one coupling plate (20) when the retainer plate is in the second angular position relative to the one coupling plate (20).

3. A planar coupling assembly in accordance with claim 1 or claim 2, wherein the struts (38) in the one coupling plate (20) respectively pivot within the recesses (26, 28, 30, 32, 34, 36) about individual pivot axes, and including at least one spring (52) carried by the one coupling plate (20) urging the struts (38) for pivotal motion about the pivot axes.

4. A planar coupling assembly in accordance with any of claims 1 to 3, including means (18) for effecting angular movement of the retainer plate (22) relative to the one coupling plate (20) between the first angular position and the second angular position.

5. A planar coupling assembly in accordance with claim 4, wherein the means (18) for effecting angular movement of the retainer plate (22) includes a lubrication oil disposed between the coupling plates (10, 20), the lubrication oil establishing fluidic drag forces on the retainer plate when the coupling plates overrun, one with respect to the other, whereby the retainer plate (22) is shifted from the first angular position to the second angular position.

6. A planar coupling assembly in accordance with claim 4 or claim 5, wherein the means for effecting angular movement of the retainer plate (22) includes a pin and slot connection (76, 78) between the one coupling plate (20) and the retainer plate (22), the first angular position of the retainer plate being defined when the pin (76) is in a first position relative to the slot (78), the second angular position of the retainer plate being defined when the pin (76) is in a second position relative to the slot (78).

7. A planar coupling assembly in accordance with any of claims 1 to 6, wherein the one coupling plate (20) has multiple sets of strut recess pairs (26, 28; 30, 32; 34, 36), the retainer plate apertures (46) registering with one recess (26, 30, 34) of each set of the recess pairs when the retainer plate is in the first angular position relative to the one coupling plate, and the retainer plate apertures (46) registering with the other recess (28, 32, 36) of each set of the recess pairs when the retainer plate is in a third angular position relative to the one coupling plate, and wherein the retainer plate apertures (46) are out of registry with the recesses (26, 28, 30, 32, 34, 36) in the one coupling plate when the retainer plate is in the second angular position relative to the one coupling plate.

8. A planar coupling assembly in accordance with claim 7, wherein the retainer plate (22) includes an actuator portion (72) and the planar coupling assembly further includes an actuator means (74) engageable with the actuator portion (72) for angularly indexing the retainer plate (22) from one of the angular positions to another, thereby changing the operating mode for free-wheeling relative motion in both directions, for torque transfer in one direction and free-wheeling relative motion in the opposite direction and for torque transfer in the other direction and free-wheeling relative motion in the opposite direction.

9. A planar coupling assembly in accordance with claim 8, wherein the actuator portion includes an actuator tab (72) on the retainer plate (22) extending radially inward relative to the one coupling plate (20), and the actuator means includes an actuator shaft (18) operatively connected to the one coupling plate and engageable with the actuator tab (72), whereby the retainer plate (22) is angularly adjusted relative to the one coupling plate (20) upon rotary indexing motion of the actuator shaft (18) relative to the one coupling plate (20).

## Patentansprüche

1. Ebene Freilaufkupplungsbaugruppe, die ein Paar ebener Kupplungsplatten (10, 20) angeordnet in einem eng nebeneinanderliegenden Verhältnis, wobei jede Kupplungsplatte um eine gemeinsame Achse (A) drehbar ist, und eine Mehrzahl von Streben (38) umfasst, die in winkelförmig verteilten Ausnehmungen (26, 28, 30, 32, 34, 36) aufgenommen werden, welche in der einen der Kupplungsplatte (20) ausgebildet sind, wobei jede Strebe (38) aus der Ausnehmung in der einen Kupplungsplatte in Eingriff mit in der anderen Kupplungsplatte (10) ausgebildeten Ausnehmungen (48) vorsteht, **gekennzeichnet durch** eine Strebenhalteplatte (22), die zwischen den Kupplungsplatten (10, 20) angeordnet und allgemein mit einer der Kupplungsplatten (20) drehbar ist, wobei die Halteplatte (22) eine Mehrzahl winkelförmig verteilter Öffnungen (46) einschließt, und die Halteplatte (22) winkelförmig in bezug zu der einen Kupplungsplatte (20) und den Streben (38) aus einer ersten Winkelposition, wo sich eine erste der Streben (38) **durch** eine der Halteplattenöffnungen (46) in Eingriff mit der anderen Kupplungsplatte (10) erstreckt, zu einer zweiten Winkelposition bewegbar ist, in der die erste der Streben (38) sich nicht **durch** die eine Halteplattenöffnung (46) in Eingriff mit der anderen Kupplungsplatte (10) erstreckt.

2. Ebene Kupplungsbaugruppe nach Anspruch 1, bei der die Halteplatte (22) die Streben (38) innerhalb der Ausnehmungen (26, 30, 34) in der einen Kupplungsplatte (20) festhält, wenn sich die Halteplatte in der zweiten Winkelposition in bezug zu der einen Kupplungsplatte (20) befindet.

3. Ebene Kupplungsbaugruppe nach Anspruch 1 oder Anspruch 2, bei der die Streben (38) in der einen Kupplungsplatte (20) jeweils innerhalb der Ausnehmungen (26, 28, 30, 32, 34, 36) um einzelne Drehachsen schwenken, und die mindestens eine Feder (52) einschließt, welche durch die eine Kupplungsplatte (20) getragen wird und die Streben (38) für Schwenkbewegung um die Drehachsen drückt.

4. Ebene Kupplungsbaugruppe nach einem der Ansprüche 1 bis 3, die ein Mittel (18) zum Bewirken von Winkelbewegung der Halteplatte (22) in bezug zu der einen Kupplungsplatte (20) zwischen der ersten Winkelposition und der zweiten Winkelposition aufweist.

5. Ebene Kupplungsbaugruppe nach Anspruch 4, bei der das Mittel (18) zum Bewirken von Winkelbewegung der Halteplatte (22) ein zwischen den Kupplungsplatten (10, 20) vorgesehenes Schmieröl einschließt, wobei das Schmieröl strömungstechnische hydrodynamische Widerstandskräfte auf der Halteplatte erzeugt, wenn die Kupplungsplatten in bezug zueinander freilaufen, wodurch die Halteplatte (22) aus der ersten Winkelposition zu der zweiten Winkelposition verschoben wird.

6. Ebene Kupplungsbaugruppe nach Anspruch 4 oder Anspruch 5, bei der das Mittel zum Bewirken von Winkelbewegung der Halteplatte (22) eine Verbindung aus Stift und Schlitz (76, 78) zwischen der einen Kupplungsplatte (20) und der Halteplatte (22) einschließt, wobei die erste Winkelposition der Halteplatte definiert wird, wenn der Stift (76) sich in einer ersten Position in bezug zum Schlitz (78) befindet, und die zweite Winkelposition der Halteplatte definiert wird, wenn der Stift (76) sich in einer zweiten Position in bezug zum Schlitz (78) befindet.

7. Ebene Kupplungsbaugruppe nach einem der Ansprüche 1 bis 6, bei der die eine Kupplungsplatte (20) mehrere Sätze von Strebenausnehmungspaaren (26, 28; 30, 32; 34, 36) aufweist, und die Halteplattenöffnungen (46) mit einer Ausnehmung (26, 30, 34) jedes Satzes der Ausnehmungspaare ausgerichtet sind, wenn die Halteplatte sich in der ersten Winkelposition in bezug zu der einen Kupplungsplatte befindet, und die Halteplattenöffnungen (46) mit der anderen Ausnehmung (28, 32, 36) jedes Satzes von Ausnehmungspaaren ausgerichtet sind, wenn die Halteplatte sich in einer dritten Winkelposition in bezug zu der einen Kupplungsplatte befindet, und bei der die Halteplattenöffnungen (46) nicht mit den Ausnehmungen (26, 28, 30, 32, 34, 36) in der einen Kupplungsplatte ausgerichtet sind, wenn die Halteplatte sich in der zweiten Winkelposition in bezug zu der einen Kupplungsplatte befindet.

8. Ebene Kupplungsbaugruppe nach Anspruch 7, bei der die Halteplatte (22) einen Betätigungsteil (72) einschließt und die ebene Kupplungsbaugruppe ferner ein Betätigungsmittel (74) einschließt, das mit dem Betätigungsteil (72) zum winkelförmigen Umschalten der Halteplatte (22) aus einer der Winkelpositionen zu einer anderen in Eingriff kommen kann, wodurch die Betriebsart für freilaufende Relativbewegung in beide Richtungen für Drehmomentübertragung in einer Richtung und freilaufende Relativbewegung in der entgegengesetzten Richtung und für Drehmomentübertragung in der anderen Richtung und freilaufende Relativbewegung in die entgegengesetzte Richtung geändert werden kann.

9. Ebene Kupplungsbaugruppe nach Anspruch 8, bei der der Betätigungsteil einen Betätigungsvorsprung (72) an der Halteplatte (22) einschließt, der sich radial nach innen in bezug zu der einen Kupplungsplatte (20) erstreckt, und das Betätigungsmittel eine Betätigungswelle (18) einschließt, die operativ mit der einen Kupplungsplatte verbunden ist und mit dem Betätigungsvorsprung (72) ergriffen werden kann, wodurch die Halteplatte (20) winkelförmig in bezug zu der einen Kupplungsplatte (20) bei Drehschaltbewegung der Betätigungswelle (18) in bezug zu der einen Kupplungsplatte (20) eingestellt wird.

## Revendications

1. Un ensemble accouplement à roue libre planaire incluant une paire de plateaux d'accouplement planaires (10, 20) situés en relation juxtaposée proche, chaque plateau d'accouplement pouvant tourner autour d'un axe commun (A), et une pluralité de plaquettes de compression (38) reçues dans des renfoncements espacés angulairement (26, 28, 30, 32, 34, 36) formés dans un plateau d'accouplement (20), chaque plaquette de compression (38) saillant du renfoncement dans l'un plateau d'accouplement en engagement avec les renfoncements (48) formés dans l'autre plateau d'accouplement (10), **caractérisé par** une plaque de retenue de plaquettes de compression (22) disposée entre les plateaux d'accouplement (10, 20) et pouvant généralement tourner avec un des plateaux d'accouplement (20), la plaque de retenue (22) incluant une pluralité d'ouvertures espacées angulairement (46), la plaque de retenue (22) étant mobile angulairement par rapport à l'un plateau d'accouplement (20) et aux plaquettes de compression (38) depuis une première position angulaire, où une première des plaquettes de compression (38) s'étend à travers une des ouvertures de la plaque de retenue (46) en engagement avec l'autre plateau d'accouplement (10), à une deuxième position angulaire, où la première des plaquettes de compression (38) ne s'étend pas à travers l'une ouverture de la plaque de retenue (46) en engagement avec l'autre plateau d'accouplement (10).

2. Un ensemble accouplement planaire selon la revendication 1, où la plaque de retenue (22) retient les plaquettes de compression (38) dans les renfoncements (26, 30, 34) dans l'un plateau d'accouplement (20) lorsque la plaque de retenue est à la deuxième position angulaire par rapport à l'un plateau d'accouplement (20).

3. Un ensemble accouplement planaire selon la revendication 1 ou la revendication 2, où les plaquettes de compression (38) dans l'un plateau d'accouplement (20) pivotent respectivement dans les renfoncements (26, 28, 30, 32, 34, 36) autour d'axes de pivot individuels, et incluant au moins un ressort (52) porté par l'un plateau d'accouplement (20) incitant les plaquettes de compression (38) à un mouvement de pivotement autour des axes de pivot.

4. Un ensemble accouplement planaire selon l'une quelconque des revendications 1 à 3, incluant un moyen (18) d'effectuer un mouvement angulaire de la plaque de retenue (22) par rapport à l'un plateau d'accouplement (20) entre la première position angulaire et la deuxième position angulaire.

5. Un ensemble accouplement planaire selon la revendication 4, où le moyen (18) d'effectuer un mouvement angulaire de la plaque de retenue (22) inclut une huile de lubrification disposée entre les plateaux d'accouplement (10, 20), l'huile de lubrification établissant des forces de traînée fluidiques sur la plaque de retenue lorsque les plateaux d'accouplement sont en roue libre l'un relativement à l'autre, ce qui fait que la plaque de retenue (22) est déplacée de la première position angulaire à la deuxième position angulaire.

6. Un ensemble accouplement planaire selon la revendication 4 ou la revendication 5, où le moyen d'effectuer un mouvement angulaire de la plaque de retenue (22) inclut un raccordement à goujon et fente (76, 78) entre l'un plateau d'accouplement (20) et la plaque de retenue (22), la première position angulaire de la plaque de retenue étant définie lorsque le goujon (76) est à une première position par rapport à la fente (78), la deuxième position angulaire de la plaque de retenue étant définie lorsque le goujon (76) est à une deuxième position par rapport à la fente (78).

7. Un ensemble accouplement planaire selon l'une quelconque des revendications 1 à 6, où l'un plateau d'accouplement (20) a des jeux multiples de paires de renfoncements de plaquettes de compression (26, 28 ; 30, 32 ; 34, 36), les ouvertures de la plaque de retenue (46) coïncidant avec un renfoncement (26, 30, 34) de chaque jeu des paires de renfoncements lorsque la plaque de retenue est à la première position angulaire par rapport à l'un plateau d'accouplement et les ouvertures de la plaque de retenue (46) coïncidant avec l'autre renfoncement (28, 32, 36) de chaque jeu des paires de renfoncements lorsque la plaque de retenue est à une troisième position angulaire par rapport à l'un plateau d'accouplement et où les ouvertures de la plaque de retenue (46) ne sont pas en coïncidence avec les renfoncements (26, 28, 30, 32, 34, 36) dans l'un plateau d'accouplement lorsque la plaque de retenue est à une deuxième position angulaire par rapport à l'un plateau d'accouplement.

8. Un ensemble accouplement planaire selon la revendication 7, où la plaque de retenue (22) inclut une partie de manoeuvre (72) et l'ensemble accouplement planaire inclut en plus un moyen de manoeuvre (74) engageable avec la partie de manoeuvre (72) pour indexer angulairement la plaque de retenue (22) d'une des positions angulaires à une autre, changeant ainsi le mode de fonctionnement en un mouvement relatif en roue libre dans les deux sens, pour le transfert du couple dans un sens et le mouvement relatif en roue libre dans le sens opposé et pour le transfert du couple dans l'autre sens et le mouvement relatif en roue libre dans le sens opposé.

9. Un ensemble accouplement planaire selon la revendication 8, où la partie de manoeuvre inclut une languette de manoeuvre (72) sur la plaque de retenue (22) s'étendant radialement vers l'intérieur par rapport à l'un plateau d'accouplement (20), et le moyen de manoeuvre inclut un arbre de manoeuvre (18) raccordé de manière opératoire à l'un plateau d'accouplement et engageable avec la languette de manoeuvre (72), ce qui fait que la plaque de retenue (22) est ajustée angulairement par rapport à l'un plateau d'accouplement (20) lors du mouvement d'indexage rotatif de l'arbre de manoeuvre (18) par rapport à l'un plateau d'accouplement (20).
